# EUROPEAN PATENT APPLICATION

(11) **EP 1 491 666 A1**
(43) Date of publication of application: **29.12.2004**
(21) Application number: 03745458.4
(22) Date of filing: 01.04.2003
(51) Int. Cl.: D02G 3/02

(54) **METHOD OF REGENERATING USED HEAT-RESISTANT HIGH-PERFORMANCE TEXTILE YARN PRODUCTS**

(30) Priority: 02.04.2002 JP 2002099868; 21.02.2003 JP 2003045090
(71) Applicant: DU PONT-TORAY COMPANY, LTD., Chuo-ku, Tokyo 103-0023 (JP)
(72) Inventor: TSUKAMOTO, Koichi, Nishitokyo-shi, Tokyo 202-0023 (JP); KOSUGE, Kazuhiko, Itabashi-ku, Tokyo 173-0013 (JP)
(74) Representative: Teipel, Stephan, Dr.
(86) International application number: PCT/JP2003/004190
(87) International publication number: WO 2003/083193

(57) **Abstract**

The present invention provides a recycling processingmethod for used heat-resistant and high-performance spun yarn products characterized in that heat-resistant and high-performance spun yarn products are preliminarily washed at request and undergo crushing processes, in that a crushed material thus obtained is opened to become a cotton-like material, and in that the cotton-like material is spun for recycling the spun yarn, and according to this method, used products of heat-resistant and high-performance spun yarn can be recycled particularly as yarn.

## Description

### Technical Field

The present invention relates to a method for recycling used heat-resistant and high-performance spun yarn products such as wholly aromatic polyamide fiber and to a recycled heat-resistant and high-performance spun yarn and others that can be obtained by the above recycling method.

### Background Art

Since wholly aromatic polyamide fiber is heat-resistant and exhibits superior strength and cut resistance, it is used for a variety of purposes such as working gloves, safeguard wear and industrial materials. While heat-resistant and high-performance spun yarn products employ heat-resistant and high-performance spun yarn as represented by the wholly aromatic polyamide fiber that exhibits the above-mentioned superior properties, its performance degrades with long-term use so that it cannot be used owing to stains, rubbing, breaking or snagging and is finally wasted. As a result, such used spun yarn products result in wastes by large amounts.

However, unlike generally used products, hardly any reuse of such used products of heat-resistant and high-performance spun yarn has been performed, but a greater part thereof is either wasted through incineration or landfill. The "Basic Law for Establishing a Recycling-based Society" has been issued in June 2000 in which basic principles related to establishment of a recycling-based society are defined. For instance, as for air conditioners, televisions, refrigerators and washing machines, the "Electric Home Appliances Recycling Law" has been actually enforced in April 2001, and reuse of resources from collected products has been performed. As for used products of generic fiber, reuse of items that are referred to "recovered fiber" such as rag (used clothes and others) and waste fiber has traditionally been performed in the fiber industry (Textile Machinery Society vol. 55, No. 22(2002) p. 71-78). For instance, in the reused material market, such recovered fiber is employed as material recycle stuff that is processed into cotton or yarn out of which fiber products such as felt or working gloves are made. More particularly, used fiber products are converted into cotton-like material by using known opening machine, and such cotton-like material is manufactured into nonwoven cloth or the obtained cotton-like material is spun into spun yarn whereupon the spun yarn is used for manufacturing fiber products.

It might be considered to apply a method for reuse similar to that for used products of generic fiber to used products of heat-resistant and high-performance spun yarn. However, since heat-resistant and high-performance spun yarn is superior in heat-resistance and particularly exhibits higher tensile strength and cut resistance when compared to generic fiber, various inconveniences are caused when employing conventional opening machine under the same conventional conditions as those for generic fiber products, and a drawback is presented in that no effective and sufficient opening can be performed.

### Disclosure of the Invention

The present invention aims to provide a method for recycling reuse of used spun yarn products containing spun yarn comprised of heat-resistant and high-performance fiber such as wholly aromatic polyamide fiber, particularly as spun yarn, and to provide fiber products containing the obtained recycled heat-resistant and high-performance spun yarn.

As a result of intensive studies for achieving the above purpose, the inventors of the present invention have found that used spun yarn products of heat-resistant and high-performance spun yarn shall not be immediately opened but that by performing crushing processes prior to the opening, used spun yarn products of heat-resistant and high-performance spun yarn can be easily opened to become cotton-like upon suitably selecting conditions for opening even when using a conventional opening machine. The inventors of the present invention have further continued studies to complete the present invention.

More particularly, the present invention relates to
(1) a method for recycling used heat-resistant and high-performance spun yarn products, characterized in that used heat-resistant and high-performance spun yarn products are washed in advance at request and undergo crushing processes, in that a crushed material thus obtained is opened to become a cotton-like material, and in that the cotton-like material is spun for recycling the spun yarn,
(2) the method for recycling used heat-resistant and high-performance spun yarn products as recited in above (1), wherein unused discontinuous fiber having a length of 30 to 200 mm is intermixed at a ratio of 10 to 90% of the total prior to or at the time of spinning,
(3) the method for recycling used heat-resistant and high-performance spun yarn products as recited in the above (1) or (2), wherein the heat-resistant and high-performance spun yarn is comprised of one or more types of fiber selected from the group consisting of wholly aromatic polyamide fiber, wholly aromatic polyester fiber and polyparaphenylene benzobisoxazole fiber,
(4) the method for recycling used heat-resistant and high-performance spun yarn products as recited in the above (1) to (3), wherein the used heat-resistant and high-performance spun yarn product is a safeguard wear and a working glove,
(5) the method for recycling used heat-resistant and high-performance spun yarn products as recited in the above (1) to (4), wherein the cotton-like material contains discontinuous fiber having a length of not less than 20 mm by not less than 50% and/or contains discontinuous fiber having a length that corresponds to not less than 40% of a length of a discontinuous fiber of spun yarn employed in the heat-resistant and high-performance spun yarn product,
(6) a recycled heat-resistant and high-performance spun yarn that is obtained by the method for recycling used heat-resistant and high-performance spun yarn products as recited in the above (1) to (5),
(7) a recycled heat-resistant and high-performance spun yarn, wherein the spun yarn contains not less than 20% of discontinuous fiber having a length of not less than 20 mm,
(8) a fiber product containing the recycled heat-resistant and high-performance spun yarn as recited in the above (6) or (7),
(9) the fiber product as recited in the above (8), wherein the product is a braid, a textile, knittings, a rope, a cord, a packing material, a safeguard wear or a working glove,
(10) the fiber product as recited in the above (8) or (9), wherein it is indicated on the product that it contains recycled heat-resistant and high-performance spun yarn, and
(11) the fiber product as recited in the above (10), wherein a number of recycling times of the recycled heat-resistant and high-performance spun yarn is further indicated.

### Brief Explanation of the Drawings

Fig. 1 is a longitudinal sectional view of a crusher that is used in crushing operations. In this respect, 6 denotes a crusher, 10 a chassis, 11 and 12 upper crushing rollers, 13 a lower crushing roller, 14 and 15 screw-like crushing blades, 19a a counter knife and 19b an auxiliary guide.

Fig. 2 is a plan view of the crusher of Fig. 1. In the drawing, 10 to 15 are equivalent to the above descriptions.

Fig. 3 is a plane view of the lower crushing roller of the crusher of Fig. 1. In the drawing, 13 denotes the lower crushing roller, 16 and 17 screw-like crushing blades, and 18 grids.

Fig. 4 is a longitudinal sectional view of an opening machine that is used for opening processes. In the drawing, 1 denotes a crushed material, 1a a discontinuous fiber, 2 a feed roller, 3 a dish plate, 4 an opening cylinder, and 2a and 4a garnet wires.

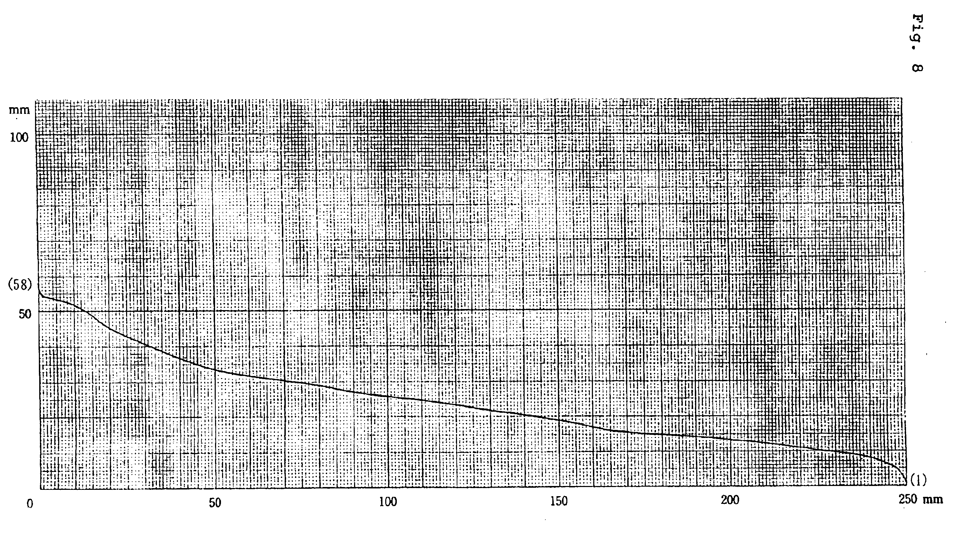

Fig. 5 is a sectional view illustrating another form of the two upper crushing rollers and the lower crushing roller in the crusher as illustrated in Figs. 1 to 13. In the drawing, 11 to 13 are equivalent to the above descriptions.

Fig. 6 is a sectional view of a device for continuously performing crushing processes and opening processes according to the present invention. In the drawing, 21a denotes a main conveyer, 21b an auxiliary conveyer, 22 feed rollers, 23 a cylinder, 24walkers, 25 an opening portion, 26 an openingmachine, 27 a cylinder casing, 28 a fiber stripping portion, 29 an outer casing, 30 a fiber disordering promoting portion, 31 a used heat-resistant and high-performance spun yarn product, and 32 denotes a cotton-like material.

Fig. 7 is a graph illustrating fiber length distribution of slivers after slivering (SF mixing rate 0%). The ordinate axis represents fiber length (unit: mm) and the abscissa axis represents a width in which a required amount of samples is aligned in parallel, and the width is the distance of 25 cm.

Fig. 8 is a graph illustrating fiber length distribution of slivers after slivering (SF mixing rate 0%). The ordinate axis represents fiber length (unit: mm) and the abscissa axis represents a width in which a required amount of samples is aligned in parallel, and the width is the distance of 25 cm.

### Best Mode for Carrying Out the Invention

As for the heat-resistant and high-performance fiber that comprises the heat-resistant andhigh-performance spun yarn used in the present invention, it is preferable to employ fiber having a thermal decomposition point of not less than 300 °C. The thermal decomposition point can be easily measured in conformity to the thermogravimetry measuring method for plastics as defined by JIS K 7120:1987. The heat-resistant high-performance fiber may alternatively be a fiber having no explicit melting point. A fiber having no explicit melting point is a fiber that exhibits no explicit peak in differential scanning calorimetry (DSC). It is further preferable that the heat-resistant and high-performance fiber has, for instance, (a) a tensile strength of not less than approximately 5 cN/dtex, and preferably not less than approximately 10 cN/dtex, and (b) a tensile elasticity of not less than approximately 400 cN/dtex. In this respect, the tensile strength and the tensile elasticity can be easily measured in conformity to the chemical fiber filament yarn testing method 8.5 as defined in JIS L 1013:1999.

More particularly, the heat-resistant and high-performance fiber used in the present invention may, for instance, be wholly aromatic polyamide fiber, wholly aromatic polyester fiber or heterocyclic high-performance fiber. Among these, wholly aromatic polyamide fiber or polyparaphenylene benzobisoxazole (hereinafter referred to as "PBO") are more preferably used.

The above wholly aromatic polyamide fiber may be broadly classified into para-type aramidfiber and meta-type aramid fiber. Either one of these may be used in the present invention. The aramid fiber may be manufactured according to known methods or any methods pursuant thereto. The para-type aramid fiber may, for instance, be a commercially available product such as polyparaphenylene terephthalamide fiber (manufactured by DuPont-Toray Co., Ltd. under the product name of KEVLAR (TRADE MARK); manufactured by Teijin Twaron Bmbh under the product name of TWARON (TRADE MARK)) or copolyparaphenylene-3,4'-diphenylether terephthalamide fiber (manufactured by Teijin Ltd. under the product name of TECHNORA (TRADE MARK) ) , and the meta-type aramid fiber may, for instance, be a commercially available product such as polymetaphenylene terephthalamide fiber (manufactured by EI DuPont de Nemours and Co. under the product name of NOMEX (TRADE MARK); manufactured by Teijin Ltd. under the product name of CONEX (TRADE MARK)). Among these, a para-type aramid fiber is preferably used as the heat-resistant and high-performance fiber, and a polyparaphenylene terephthalamide fiber is more preferably used.

The wholly aromatic polyester fiber may, for instance, include fiber made of self-condensing polyester of parahydroxybenzoic acid, polyester consisting of terephthalic acid and hydroquinone, or polyester consisting of parahydroxybenzoic acid and 6-hydroxy-2-naphthoic acid. The wholly aromatic polyester fiber may be manufactured according to known methods or any methods pursuant thereto. It is also possible to employ a commercially available product such as VECTRAN (product name sold by Kuraray Co., Ltd.).

The heterocyclic high-performance fiber may, for instance, be polyparaphenylene benzobisthiazole (PBZT) fiber, PBO fiber or polybenzimidazole fiber. The heterocyclic high-performance fiber may be manufactured according to known methods or any methods pursuant thereto, and it is also possible to employ commercially available fiber (for instance, PBO fiber sold under the product name of XYRON by Toyobo Co., Ltd).

The heat-resistant and high-performance spun yarn used in the present invention is not particularly limited as far as the spun yarn is comprised of the above heat-resistant and high-performance fiber singly or in combination. The heat-resistant and high-performance spun yarn may contain fiber other than heat-resistant and high-performance fiber. In such a case, it is preferable that the amount of content of heat-resistant and high-performance fiber is not less than 50% of the entire spun yarn. However, the heat-resistant and high-performance spun yarn used in the present invention preferably consists of the above heat-resistant and high-performance fiber only.

The heat-resistant and high-performance spun yarn product used in the present invention is not particularly limited as far as the products contain the above heat-resistant and high-performance spun yarn. More particularly, such products include, for instance, working gloves, safety wear, industrial materials (textile, knittings) that contain the heat-resistant and high-performance spun yarn. It is preferable that the above heat-resistant and high-performance spun yarn is singly used in such heat-resistant and high-performance spun yarn products. However, it may also contain yarn, preferably spun yarn other than heat-resistant and high-performance spun yarn. In such a case, it is preferable that the amount of content of heat-resistant and high-performance fiber is not less than 50% of the entire fiber product.

The used heat-resistant and high-performance spun yarn products used in the present invention include, besides used products of the above-described heat-resistant and high-performance spun yarn products, fiber wastes and remnants that are generated in the course of manufacturing the heat-resistant and high-performance spun yarn product.

The method for recycling used heat-resistant and high-performance spun yarn products according to the present invention is characterized in that the above-described used heat-resistant and high-performance spun yarn products are optionally washed in advance, crushing is performed upon addition of an oil finish at request whereupon the thus obtained crushed material is opened to become a cotton-like material, and in that the cotton-like material is spun for recycling the spun yarn. Among these, it is preferable to employ an arrangement in which it is possible to continuously shift from the crushing process to the opening in view of simplification and efficiency of processes. The respective processes will be explained in details hereinafter.

First, it is preferable to wash the above-described used heat-resistant and high-performance spun yarn product in advance. Through this washing process, stains adhering to the used heat-resistant and high-performance spun yarn product and intertwined items such as plastic andmetal powder or oil contents can be eliminated to consequently restrict occurrence of troubles of equipments, and effective recycling processes may be attained. Particularly, working gloves often contain metallic pieces or plastic pieces or oil is staining thereto so that it is desirable to perform sufficient washing. Performing washing operations is also preferable in view of improving the quality of recycled articles. It is also possible to check whether the used heat-resistant and high-performance spun yarn product, which is to become the ingredient, can be reused or to check whether the product contains machine parts such as bolts and other rubbish.

The washing method is not particularly limited, and it is possible to employ a known method. Among these, it is preferable to employ, beside dissolution or separation of stains or oil by using a cleaning material or a solvent, a washing method in which conventionally known rotating washing and application of impact for beating stains off is simultaneously performed with respect to an item to be washed.

In the present invention, it is possible to add some oil finish to the used heat-resistant and high-performance spun yarn product prior to or after the crushing process (to be described later) at request, depending on the humidity or season. The addition of such oil finish is not limited to prior to or after the crushing process but may also be performed with respect to the crushed article prior to or at the time of opening or with respect to the cotton-like article prior to or at the time of spinning. Addition of such oil finish will have the advantage that occurrence of static electricity during the crushing processes, the opening step or the spinning step can be restricted and that the above processes may be smoothly performed. The oil finish is not particularly limited as far as the main component of the oil finish is an oil finish that is used for ordinary spinning. The oil finish may include, for instance, animal and vegetable oil or mineral oil, an oil finish in which an interfacial active agent (anion type surface active agent, cation type surface active agent or nonionic surface active agent) is combinedwith a smoothing agent of alkylphosphate ester potassium salt, or an oil finish in which colloidal silica, a high polymer material of high viscosity, is combined to the above. While the amount of addition of such oil finish is not particularly limited, it is preferable that it is not more than approximately 2 wt% with respect to the weight of the used heat-resistant and high-performance spun yarn product.

The used heat-resistant and high-performance spun yarn product then undergoes crushing processes. Since the used heat-resistant and high-performance spun yarn product is mechanically disintegrated and separated into yarn, fragments and cotton through this crushing process, opening processes can be more easily performed to promote conversion into cotton-like material when compared to a case in which products are directly opened. The crushing process of the present invention is not particularly limited as far as the above purposes can be achieved, and it is possible to employ a known means. The present invention aims to recycle used heat-resistant and high-performance spun yarn products particularly as spun yarn, and the closer the length of the discontinuous fiber of the cotton-like material that is obtained through a later opening process is to the original length, the more can they be recycled into spun yarn having a high degree of recovery of the tensile strength. It is accordingly preferable to employ a process through which the amount of contained discontinuous fiber, which length is close to the original length, is increased in the crushing process of the present invention.

More particularly, the crushing process of the present invention includes pinching, compression, delivery, ripping, andtearingprocesses (hereinaftersimplyreferredtoas "tearing processes") of a used heat-resistant and high-performance spun yarn product. In this respect, the crushing process does not need to include all of the above operations. However, it is preferable that ripping and/or tearing processes are included. The crushing process may also include cutting processes in which the used heat-resistant and high-performance spun yarn products are roughly cut. In this case, it is preferable to set, depending on the figuration of the product, cutting intervals to be long so that the ratio of the amount of content of discontinuous fiber having a length that is close to the original length becomes as large as possible. For instance, cutting is performed at intervals that are not less than the length of the discontinuous fiber of the spun yarn that is used in the used heat-resistant and high-performance spun yarn product. It is also preferable to perform ripping and crushing so as to pinch, tear and draw out the product. By further performing scarping off and chipping off, it is also possible to shift to the opening process to be described later in one shot. More particularly, (a) a process of performing shear ripping by employing a known crushing device such as a "vertical crusher" manufactured by Takehara Machinery Laboratory, (b) processes of pinching between two rollers providedwithprotrusions, compression and tearing, (c) aprocess of shearing upon passing between two rollers provided with screw blades, and (d) a process of roughly cutting by using a known cutting machine such as scissors or a guillotine cutter are included.

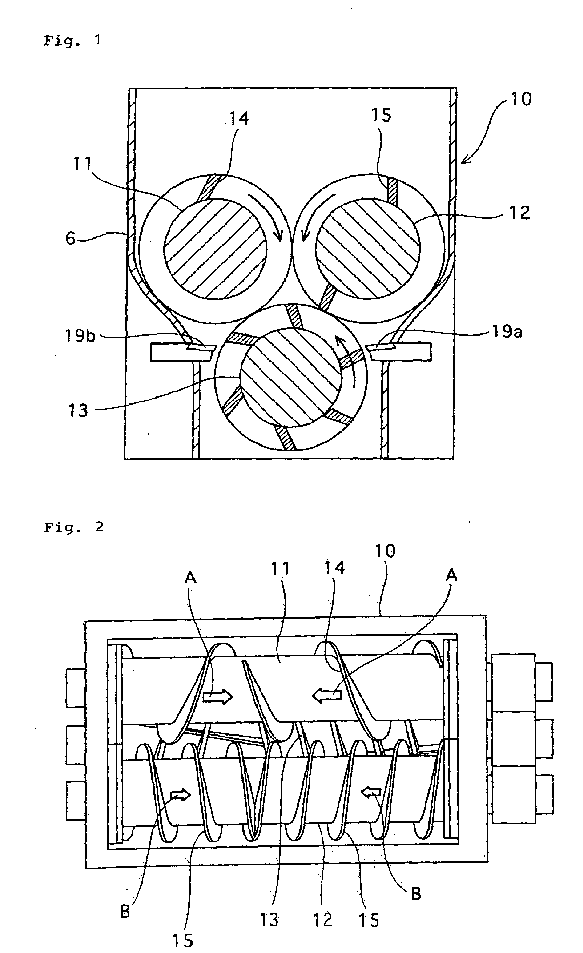

A tearing process that is suitable as the crushing process of the present invention may be performed by using a known device such as a crusher or a pinching device. Crushers or pinching devices are used for crushing paper, and particularly waste paper or plastics, for manufacturing nonwoven or for recarding processes of recovered fiber, and devices used in such fields may be used for the crushing processes of the present invention. One embodiment of a crusher for performing tearing processes will be explained with reference to Figs. 1 to 3. However, it goes without saying that the device used for the tearing processes of the present invention is not limited to this.

The crusher 6 comprises upper crushing rollers 11, 12 that form a pair and a lower crushing roller 13 that is disposed in a downwardly located manner within a chassis 10 which upper portion is open. The upper crushing rollers 11, 12 respective comprise screw-like crushing blades 14, 15. The screws of both crushing blades include contortions in the same directions, wherein one crushing blade 14 is a single screw blade while the other crushing blade 15 is a double screw blade, and both rotate in reverse directions for pinching amaterial that has been thrown in and are made to respectively act in a direction of ripping the thrown-in material as illustrated by the arrows A, B. The lower crushing roller 13 is arranged in that grids 18 are formed by two screw-like crushing blades 16, 17 of different pitches. In this respect, 19a in the drawing denotes a counter knife that is provided to oppose a discharge side of the lower crushing roller 13 and 19b an auxiliary guide provided on an opposite side thereof.

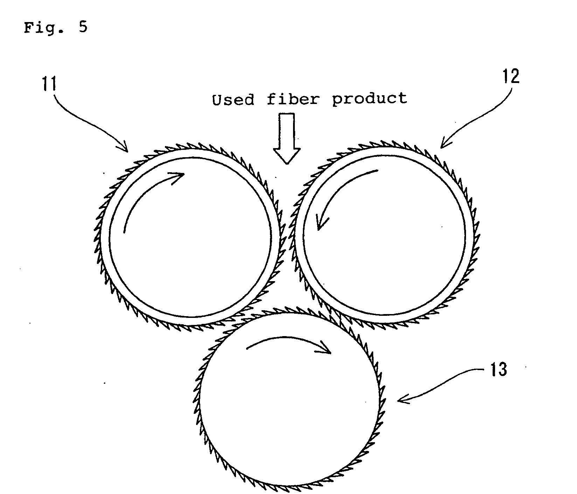

The present crusher may alternatively arranged in that serrate blades, in which protrusions are ranged successively, are provided at constant intervals instead of the screw blades that are provided at the upper crushing rollers 11, 12 and the lower crushing roller 13. In other words , this is a configuration in which a firm garnet wire having a desired shape is wound around the roller. In this case, the crushing rollers 11, 12 are preferably disposed such that protrusions of the serrate blades engage at constant intervals. A sectional view thereof is illustrated in Fig. 5. By employing such an arrangement for the crusher, the protrusions of the serrate blades of the crushing rollers 11, 12 will pinch, compress, tear, and rip the thrown-in material, and the used heat-resistant and high-performance spun yarn product will be disintegrated and separated. It is further pinched, torn and delivered by the crushing roller 13. The crushing roller 13 may be disposed to function as a so-called feed roller in the opening process, which is a following process. For knitted products such as gloves that stretch and are coarse, it is preferable to employ a crusher that pinches and tear by using two rollers provided with protrusions.

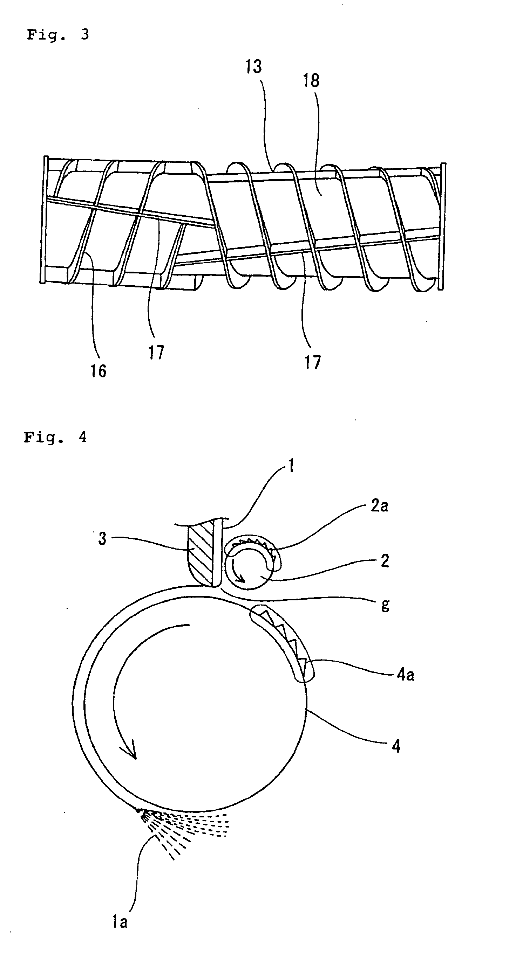

The crushed material that has been obtained through the above crushing processes is then opened. For the opening process, it is possible to employ a known opening machine (also referred to as an "opener"). It is preferable to directly connect the opening machine with equipments such as the crusher that is used in the above crushing processes for successively performing processes. This arrangement has the benefit of enabling omission of a delivery process of the crushed material. One embodiment of the opening machine that is used in the opening process of the present invention will now be explained with reference to Fig. 4. However, it goes without saying that the opening machine used in the present invention is not limited to this.

The opening machine as illustrated in Fig. 4 is arranged by disposing a feed roller 2 with a garnet wire 2a wound around its peripheral surface to oppose a dish plate 3 with a specified distance between as illustrated in enlarged view, and an opening cylinder 4 with a garnet wire 4a being wound around its peripheral surface is disposed to be apart from the tip end of the dish plate 3 and the surface of the feed roller 2 to which the garnet wire 2a is wound by a specified distance g. The crushed material 1 that has been delivered onto the garnet wire 4a of the opening cylinder 4 through the rotation of the feed roller 2 is abraded by the teeth tips of the garnet wires 4a on the opening cylinder 4 that rotates at a speed that is larger than the delivery speed of the crushed material 1 and is opened into individual discontinuous fiber 1a. The opened discontinuous fiber 1a is caught as a mixture of yarn and cotton-like material by utilizing a suitable collection means such as a negative pressure suction device. In this respect, the term "cotton-like material" in the context of the present invention includes a mixture of yarn and cotton-like material. The first opening will not result in a satisfactory cotton-like material but in a mixture of yarn and cotton-like material, and the ratio of yarn within the caught material will reduce each time opening is performed while the cotton-like material increases so that it is more easy to perform spinning. It is accordingly preferable to perform opening of the crushed material for a several number of times. While the number of repeating opening processes is dependent on the opening conditions (diameter of the opening cylinder or the density, pitch and size of blades of the garnet wires), it is preferably set to at least three times and preferably not less than four times. This is because opportunities in which impurities that intermix to the opener rotating at high speed and defect opening can be eliminated will increase, the higher the frequency is. On the other hand, when the frequency becomes higher, damages that the fiber suffers will also increase and the discontinuous fiber will become shorter so that the upper limit is preferably set to approximately five times. When opening is performed by a plurality of times as in this case, it is preferable to dispose and align opening machines by the number of times opening is performed. With this arrangement, the plurality of opening processes can be successively and thus effectively performed.

In the opening machine as illustrated in Fig. 4, crushing processes can be performed in the opening machine 4 by employing feed rollers wound around with a garnet roller instead of the dish plate 3. More particularly, the used heat-resistant and high-performance spun yarn product is ripped and torn by two opposing feed rollers wound around with garnet wire to be crushed thereby, and is then sent into the opening cylinder 4 of the opening machine.

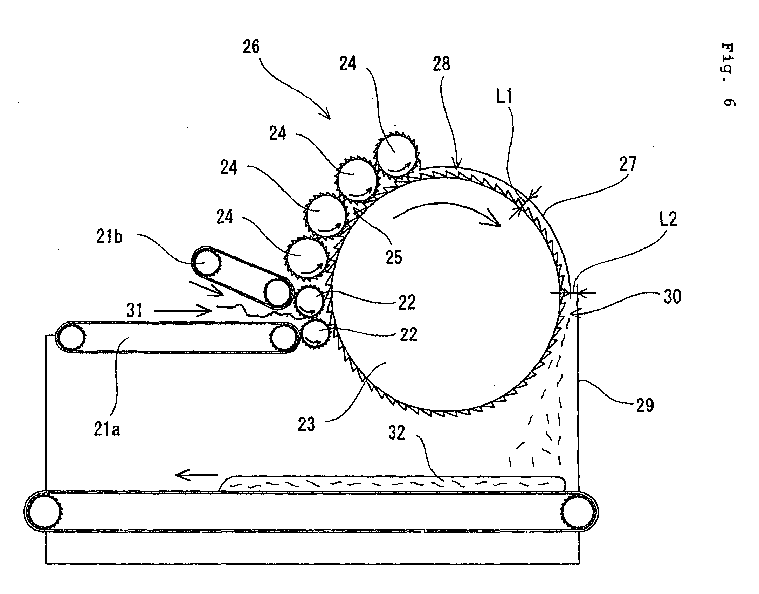

A device according to another embodiment in which crushing and opening can be performed in one shot is illustrated in Fig. 6. The present device is comprised of an opening machine 26 including an portion 25 with a main conveyer 21a, an auxiliary conveyer 21b, feed rollers 22, a cylinder 23 and walkers 24, a cylinder casing 27 that covers an outer peripheral surface of the cylinder 23 with a suitable clearance L1 between rearward of the rotation of the cylinder 23 of the opening portion 25, a fiber stripping portion 28 that is comprised by a positional relationship between the cylinder 23 and the cylinder casing 27, an outer casing 29 that is disposed in a rear end side and outside of the cylinder casing 27 such that its upper end side opposes the rear end side of the cylinder casing 27 with a suitable clearance L2 therebetween, and a fiber disordering promoting portion 30 that is comprised by an alignment relationship among the cylinder 23, the cylinder casing 27 and the outer casing 29. The used heat-resistant and high-performance spun yarn product 31 that is to be the ingredient is pinched by the auxiliary conveyer 21b while being received by the main conveyer 21a and is introduced to the two feed rollers 22 with firm garnet wires. The introduced used heat-resistant and high-performance spun yarn product 31 is crushed while being pinched by the feed rollers 22, compressed, ripped and torn, abuts against one point of the outer periphery of the feed roller 22, is delivered into the cylinder 23 that rotates in the opposite direction at high speed, scraped and chipped, whereupon the crushed material passes through the opening portion 25 comprised by the cylinder 23 and the walkers 24 and is opened thereat. The cotton-like material obtained through the opening is stripped at the fiber stripping portion 28 from the cylinder 23 through centrifugal force caused through high speed rotation of the cylinder 23 so as to obtain a cotton-like material 32. When performing opening processes several times, it is possible to obtain a cotton-like material of even better quality. Prior to processing a used heat-resistant and high-performance spun yarn product in the present device, it is preferable to preliminarily perform rough shearing of the used heat-resistant and high-performance spun yarn product at intervals of, for instance, not less than approximately 50 mm. With this arrangement, crushing processes by the feed rollers 22 can be more smoothly performed.

Conditions for the opening processes differ depending on shapes of used heat-resistant and high-performance spun yarn products, types of the heat-resistant and high-performance fiber used in such products, and types of opening machines so that they cannot be flatly defined, but suitable conditions can be determined by performing suitable tests for the used heat-resistant and high-performance spun yarn products that are to be the ingredients. However, it is preferable to select opening conditions such that cotton-like materials obtained through the opening processes contain not less than approximately 50% of discontinuous fiber having a length of not less than approximately 20 mm. It is also preferable to select opening conditions such that discontinuous fiber having a length corresponding to not less than approximately 40% of the discontinuous fiber length of the spun yarn that had been used in the original product is contained by not less than approximately 50%. As stated above, the longer the length is, in other words, the larger the amount of discontinuous fiber having a length that is close to the original fiber length is, the higher can the recovery of tensile strength of the recycled spun yarn (ratio of the tensile strength of the recycled heat-resistant and high-performance spun yarn with respect to the tensile strength of a commercially available spun yarn) be made. In this respect, the distribution of the fiber length can be easily measured through a staple diagram in conformity with "JIS L 1015:1992 7.4.1 A".

The cotton-like material obtained through the opening processes is spun to reproduce spun yarn. According to the present invention, unused discontinuous fiber can be mixed to the cot ton-like material obtained by opening the crushedmaterial by a ratio of not more than approximately 90% of the total, and preferably by approximately 10 to 90%, and more preferably by approximately 10 to 50%, and even more preferably by approximately 20 to 40%. Mixing unused discontinuous fiber has the benefit of effectively recovering the tensile strength of the recycled heat-resistant and high-performance spun yarn. The unused discontinuous fiber is preferably a discontinuous fiber with crimps. By the provision of the crimps, opening of strand- or tow-like fiber can be easier performed. It is preferable that it is a discontinuous fiber having a length of not less than approximately 30 mm, and more preferably of approximately 30 to 200 mm. The longer the length of the unused discontinuous fiber is, the larger will the amount of obtained cotton-like material be, the more will they get entangled so as to improve the reinforced effect whereby it is possible to obtain a recycled heat-resistant and high-performance spun yarn which tensile strength has been further recovered. The unused discontinuous fiber that is used in the present invention includes (a) commercially available staples of heat-resistant and high-performance fiber, and also (b) continuous fiber of heat-resistant and high-performance fiber or discontinuous fiber obtained from fiber wastes and remnants that are generated in the course of manufacturing products made of such continuous fiber. It is preferable that the length is approximately 30 to 200 mm, and that it includes crimps for enabling easy opening. The discontinuous fiber of (b) can be obtained by cutting continuous fiber of heat-resistant and high-performance fiber or discontinuous fiber obtained from fiber wastes and remnants that are produced in the course of manufacturing products made of such continuous fiber.

The method for intermixing unused discontinuous fiber with the cotton-like material is not particularly limited, and it is possible to employ, for instance, a known mixing method such as blending method for cotton and polyethylene terephthalate fiber. The intermixing of unused discontinuous fiber is performed at the time of spinning, and preferably in the silvering process of spinning as will be described later.

Since amethod for manufacturing spun yarn from a cotton-like material or a mixture of cotton-like material and unused discontinuous fiber (hereinafter simply referred to as "spinning method") has already been sufficiently established in the present technical field, such steps shall be simply followed. More particularly, the spinningmethods include one of cotton spinning type, of worsted yarn spinning type, of woolen yarn spinning type, of ramie yarn spinning type, of silk yarn spinning type, and of tow spinning type. It is also possible to suitably combine these methods. Among these, the present invention preferably employs a spinning method of the cotton spinning type, the worsted yarn spinning type, or of woolen yarn spinning type.

More particularly, a spinning method including a slivering step, a fore-spinning step and a spinning step is a suitable example of the above spinning method. Respective steps of a cotton spinning type method will now be explained.

The slivering step is also referred to as a carding step in which the cotton-like material whose bulk density has decreased through the opening process, is finally separated into single pieces of fiber whereupon a sliver, which is an aggregate of almost infinite number of strand- and filament-like long fiber, is manufactured. Such a slivering process may be performed by using a known carding device. Among these, the present invention preferably performs the slivering processes by employing flat carding. The sliver that is obtained in the present invention preferably contains not less than approximately 50% of discontinuous fiber having a length of not less than approximately 20mm and/or not less than approximately 50% of discontinuous fiber having a length that corresponds to not less than approximately 40% of the discontinuous fiber length of the spun yarn that is employed in the heat-resistant and high-performance spun yarn product. In this respect, the distribution of the fiber length can be easily measured through a staple diagram in conformity with "JIS L 1015:1992 7.4.1 A".

The fore-spinning step is a step in which the sliver is elongated for achieving improvements in the alignment of the fiber upon attaching generally a plurality of combinations of top and bottom rollers in an intermediate adjusting step for achieving a suitable fiber alignment and thickness for the purpose of supplying the sliver, which has been manufactured in the slivering step, to the spinning step (which is referred to as "drafting"). The fore-spinning step is further divided into a drawing step and a roving step. A step in which operations of drafting mainly slivers of poor fiber alignment immediately after the slivering step for mainly achieving improvements in alignment are performed is referred to as the drawing step, which is usually repeated several times. A step that is performed thereafter for performing operations of sequentially thinning the thickness of the sliver by a suitable extent is referred to as the roving step.

The spinning step is a step in which operations of supplying the roving that has been obtained in the roving step and finally converting the same into a desired width (yarn count) and of winding the same up after twisting the same at request. In this step, it is usually the case that twisting and winding is simultaneously performed.

The thus obtained recycled heat-resistant and high-performance spun yarn preferably contains not less than approximately 20% of discontinuous fiber having a length of not less than approximately 20 mm. As mentioned above, the reason for this is that the larger the amount of contained discontinuous fiber of long length is, the more can the recovery of the tensile strength be improved. In this respect, the distribution of the fiber length can be easily measured through a staple diagram in conformity with "JIS L 1015:1992 7.4.1 A".

A recycled heat-resistant and high-performance spun yarn containing not less than approximately 20% of discontinuous fiber having a length of not less than approximately 20 mm, and preferably not less than approximately 35%, and even more preferably not less than approximately 50% exhibits the effect that the ratio of the tensile strength of the recycled heat-resistant and high-performance spun yarn with respect to the tensile strength of unused heat-resistant and high-performance spun yarn is high, and has thus the benefit that it can accordingly be used for a large variety of purposes. More particularly, the tensile strength of the recycled heat-resistant and high-performance spun yarn is approximately 15 to 100% with respect to the tensile strength of unused heat-resistant and high-performance spun yarn, and preferably approximately 35 to 100%, and more preferably approximately 60 to 100%. The tensile strength of spun yarn is measured in conformity to "JIS L 1095: 1995 9.5". The recycled heat-resistant and high-performance spun yarn has the further benefit that it can be further thinned and that exhibits a soft texture.

The recycled heat-resistant and high-performance spun yarn denotes a spun yarn that is obtained by recycling used heat-resistant and high-performance spun yarn products, wherein the used heat-resistant and high-performance spun yarn products are as listed above. The distribution of the fiber length can be easily measured through a staple diagram in conformity to "JIS L 1015:1992 7.4.1 A".

The recycled heat-resistant and high-performance spun yarn may contain unused discontinuous fiber. The unused discontinuous fiber is preferably discontinuous fiber that includes crimps, that has a length of not less than approximately 30 mm, and more preferably of approximately 30 to 200 mm, or that exhibits both of these properties. The unused discontinuous fiber also includes commercially available staples of heat-resistant and high-performance fiber, continuous fiber of heat-resistant and high-performance spun yarn and fiber wastes and remnants that are generated in the course of manufacturing products of such continuous fiber. The content ratio of unused discontinuous fiber is approximately 10 to 90% of the total, preferably approximately 10 to 50% and more preferable approximately 20 to 40%. In such a case in which the recycled heat-resistant and high-performance spun yarn contains unused discontinuous fiber, the distribution of the fiber length is converted upon eliminating the amount of unused discontinuous fiber. More particularly, the recycled heat-resistant and high-performance spun yarn according to the present invention preferably contains not less than approximately 20% of discontinuous fiber derived from the used heat-resistant and high-performance spun yarn product except for unused discontinuous fiber, preferably not less than approximately 40% andmore preferably not less than approximately 60% that has a length of not less than approximately 20 mm. Moreover, the recycled heat-resistant and high-performance spun yarn according to the present invention is preferably arranged in that not less than approximately 20% of the discontinuous fiber derived from used heat-resistant and high-performance spun yarn products except for the unused discontinuous fiber, preferably not less than approximately 30%, and even more preferably not less than approximately 40% has a length of not less than approximately 25 mm.

Since the recycled heat-resistant and high-performance spun yarn according to the present invention contains heat-resistant and high-performance fiber, it can be applied to various purposes that take advantage of the properties of the fiber. For instance, it is possible to manufacture braids by braiding the recycled heat-resistant and high-performance spun yarn. It is further possible to manufacture fabric by weaving or knitting the recycled heat-resistant and high-performance spun yarn. Such woven cloth exhibits superior heat-resistance so that it may be used for various purposes as a heat-resistant sheet. Such woven cloth can also be used for manufacturing fiber products such as clothing. It is particularly preferable to employ the recycled heat-resistant and high-performance spun yarn of the present invention for safeguard wear. While the safeguard wear is not particularly limited as far as it is clothing aiming for protecting a body of a person wearing the same, it includes work clothing, asbestos clothing, and various sports attires. It is also to manufacture gloves from recycled heat-resistant and high-performance spun yarn and woven cloths containing recycled heat-resistant and high-performance spun yarn. Gloves and particularly working gloves can also be manufactured by knitting the recycled heat-resistant and high-performance spun yarn of the present invention. It is also applicable to packing material and ropes.

It is preferable that the fiber product containing the recycled heat-resistant and high-performance spun yarn according to the present invention bears an indication that it includes recycled heat-resistant and high-performance spun yarn. While the indication method is not particularly limited, it may include, for instance, a case in which letters indicating that "recycled heat-resistant and high-performance spun yarn is contained" are indicated. There are also cases in which generally known recycle marks are appended. Further, under the agreement that specific marks and colors denote that the product contains recycled heat-resistant and high-performance spun yarn, it is also possible to append such marks or colors.

It is further preferable that the fiber product bears an indication indicative of a number of times the recycled heat-resistant and high-performance spun yarn has been recycled. It is impossible to recycle the used heat-resistant and high-performance spun yarn products in an infinite manner even though by employing the recycling method of the present invention. Accordingly, used heat-resistant and high-performance spun yarn products that have been recycled by a specified number of times will be wasted. Indicating the number of times the used heat-resistant and high-performance spun yarn has been recycled has the benefit that it is possible to immediately judge whether the yarn is appropriate as an ingredient of the recycling method of the present invention. The method of displaying the frequency of recycling is not particularly limited, and it may be similar to the above-described method for indicating that the product contains recycled heat-resistant and high-performance spun yarn.

The indication that the product contains recycled heat-resistant andhigh-performance spun yarn and the indication of the frequency of recycling shall be appended to the fiber product of the present invention by using known methods. For instances, a label may be adhered to the fiber product according to the present invention. It might as well be sewn, knitted or woven into the fiber product according to the present invention.

### Example

### Example 1

A working glove made of para-type aramid fiber was employed as a used heat-resistant and high-performance spun yarn product. Such a glove was a glove manufactured by using five strings of pull-aligned KEVLAR (registered trademark), which is a polyparaphenylene terephthalamide fiber yarn, 20/2 c/c yarn (manufactured by DuPont-Toray Co., Ltd.) that were knitted in a 7 gauge SJF knitting machine (computerized fashion knitting machine) manufactured by Shima Seiki Mfg. , Ltd. The used KEVLAR glove underwent cleaning processes including washing and drying and addition of an oil finish for preventing electrification. The used KEVLAR glove then underwent crushing processes (two-staged crushing) by using a vertical crusher (manufactured by Takehara Machinery Laboratory) whereupon opening processes were performed by using an opener ("NS Super Opener" of Nihon SpindleMfg. , Co. Ltd.). The thus obtained cotton-like material (also containing insufficiently opened yarn-like material) then underwent the slivering step, the drawing step, and the roving step for manufacturing the recycled heat-resistant and high-performance spun yarn according to the present invention. In this respect, where no crushing process is to be performed but suitable partial cutting has been performed as the crushing process, the same steps were performed.

Differences in the figuration of the cotton-like materials after the first opening and in the occurrence of static electricity owing to the differences in crushing processes and to the presence/absence of addition of oil finish have been listed in Table 1.

**TABLE 1**

| Crushing processing method | | None | Partial cutting | Crusher |
|---|---|---|---|---|
| Figuration of cotton-like material | Yarn-like material | Plenty | Little | Little |
| | Cotton-li ke material | Little | Plenty | Plenty |
| Addition of oil finish | None | Static electricity generated | Static electricity generated | Static electricity generated |
| | Present | Little static electricity generated | Little static electricity generated | Little static electricity generated |

In this respect, when performing crushing processes, the results related to generation of static electricity at the time of performing crushing processes were identical to those after the first opening.

When no crushing processes were performed, in case gloves were not orderly and flatly laid and locked portions of gloves were hardly pinched by the feed rollers so that pieces got jammed to stop the feed rollers, and even if such pieces were send out from the feed rollers, ripping could be hardly performed since the strength of the KEVLAR (registered trademark) yarn was strong, and pieces were discharged while being insufficiently opened to thus get stagnated in the machine or twined which caused a stop of the opening cylinder. Where fingertip portions or scraps of the gloves were discharged as they were and contained in the cotton-like material, opening needed to be repeatedly performed upon extracting the same so that the efficiency became remarkably worse when compared to normal opening.

When suitable partial cutting was performed as the crushing method, since gloves were cut into suitable sizes in advance, mechanicallycutanddisintegrated, or ripped and separated prior to opening, pieces got easier pinched between the feed rollers, and feeding out from the feed roller could also be smoothly performed so that the cylinder was not stopped. Opening by using the opening cylinder became also stable to thus improve the efficiency.

While gloves are of stretching arrangement since they are knittings, when the delivery from the feed rollers was too fast, the opening time for the opening cylinder of the opener was short so that opening was insufficiently performed and got twined as long yarn. When it was too slow, the glove was stretched by the opening cylinder prior to passing through the feed rollers since opening is performed while slowly moving to the opening cylinder, and after passing the feed rollers, pieces would twine around the opening cylinder or leap into the opener to cause abnormal load whereby the opener was terminated. However, but performing at least partial cutting and disintegrating through preliminary ripping processes or cutting prior to opening the glove, it is possible to cut off the stretch in the glove or long yarn so that smooth opening processes are enabled, which leads to improvements in the efficiency of opening processes and the ratio of converting into cotton-like material and also to elimination of abnormal stop of the machine.

When crushing processes using a crusher were performed in which crushing processes through suitable partial cutting are further implemented, the used glove was roughly cut and ripped in the crushing of the first stage whereupon cut pieces and others were sent to the crushing of the second stage, and in the crushing of the second stage, cut pieces and others were further ripped and torn. As a result, the condition of the thus obtained crushed material was such that fingertip portions, cut pieces of approximately 50 mm, torn scraps, yarn and some little amount of cotton-like materials were seen. In this respect, the crushing processes using the crusher are preferably two-staged crushing. When performing crushing by not less than three stages, conversion into cotton-like material will be too much promoted so that the crushed material will become too fine, and in view of intention of the present invention of effectively performing operations with an opening machine and in view of the point of processing into discontinuous fiber length that is as long as possible, it is preferable to employ the above-described two-staged crushing. When the crushed material obtained by the crushing processes through the crusher were opened, little troubles were caused in the opening machine, and conversion into yarn-like and cotton-like materials could be relatively well performed.

### Example 2

Exactly the same processes were performed as those of Example 1 except for the point that opening was performed by two times, four times and six times. That is, relative evaluation was performed in view of opening properties and conversion into cotton-like material depending on the frequency of opening.

Conversion into cotton-like material was insufficient after performing the crushing processes of Example 1 once, with the cotton-like material occupying approximately 50% of the entire amount and the amount of ripped yarn and scraps of knittings also being large, wherein a large amount of rubber constituting the gloves, elastic covering yarn, or clumpy portions such as firm locked portions of wrist portions of glove and knots between finger portions that are hard to be opened remained without being shaken down by the rapid rotation of the opener.

However, when performing swiping by two times, most of the above-listed foreign matters were shaken off so that cotton-like material, yarn and some small amount of foreign matter remained. When performing swiping by four times, the yarn reduced to approximately 20%, and scraps of the knittings of the original gloves also reduced. When performing swiping by six times, some small degree of improvements were found when compared to swiping by four times, but almost all of the foreign matters was shaken off to be eliminated. However, finely crushed yarn and rubber were still intertwined and contained in the cotton. Since the damage with respect to the yarn becomes larger the higher the frequency of repetition is, repetition by four or five times was suitable in view of the ratio of contained yarn with respect to the whole.

### Example 3

The same processes as those of Example 2 were performed except for the point that 25 wt%, 50 wt% and 75% of unused KEVLAR (registered trademark) staples (manufactured by DuPont-Toray Co. , Ltd.) having a fiber length of 51 mm was intermixed with the cotton-like material obtained through opening whereupon the obtained composite was spun, and an oil finish was further added prior to crushing processes, and opening processes were performed four times to obtain the recycled heat-resistant and high-performance spun yarn according to the present invention.

The results of evaluation in the course of the spinning step are listed in Table 2. The sliver strength in the table was measured for the pulling force by using a draft force tester (manufactured by Eikoo Sokki KK). The measuring conditions were as follows: roller gauge: 60 mm; draft ratio: 1.5; front speed: 0.5 m/minute. In the table, the double circle denotes a very favorable condition, the single circle a favorable condition, and the triangle a just fair condition.

It can be understood from Table 2 that the higher the amount of intermixing rate of unused KEVLAR (registered trademark) staples (in the table referred to as "SF mixing rate") becomes, the higher will the level of the sliver strength will become.

**TABLE 2**

| SF mixing rate | 0% | 25% | 50% | 75% |
|---|---|---|---|---|
| Carding passability | (triangle) | (single circle) | (double circle) | (double circle) |
| Sliver density (g/m) | 1.5 | 1.8 | 2.1 | 2.5 |
| Sliver strength (g) | 20 to 70 | 40 to 120 | 70 to 140 | 70 to 130 |
| Passability of roving step | (triangle) | (single circle) | (single circle) | (double circle) |

The strength of a single yarn of the thus obtained recycled heat-resistant and high-performance spun yarn as measured in conformity with JIS L 1095:1999 9.5, and the results are listed in Table 3. Since the thickness of the yarn differs depending on the differences in SF mixing rates, the tensile strength obtained by dividing the measured single yarn strength by the thickness of the yarn was compared to that of unused KEVLAR (registered trademark) spun yarn.

As it can be understood from Table 3, a strength corresponding to 62% of the current unused spun yarn was maintained with a recycled spun yarn with a SF mixing rate of 25%, a strength corresponding to 91% of the current unused spun yarn was maintained with a recycled spun yarn with a SF mixing rate of 50%, and a strength substantially equivalent to that of the current unused spun yarn was maintained with a recycled spun yarn with a SF mixing rate of 75%.

**TABLE 3**

| SF mixing rate | 0% | 25% | 50% | 75% | Unused spun yarn |
|---|---|---|---|---|---|
| Thickness of yarn yarn count (Ne) dtex | 7 840 | 16 369 | 16 369 | 16 369 | 20 295 |
| Single yarn strength (g) | 1170 | 1760 | 2580 | 2840 | 2273 |
| Tensile strength (g/dtex) | 1.39 | 4.77 | 6.99 | 7.70 | 7.71 |

From among the methods as recited in Example 2, in the method of performing opening processes for four times, the fiber length of the sliver obtained after the slivering processes (which SF mixing rate is 0%) was measured in conformity with "JIS L 1015:1992 7.4.1A" by using a staple diagram. More particularly, the fiber length was put on the ordinate axis, wherein a specified amount of accurately measured samples was pull-aligned in parallel on the ordinate axis by using a metal comb, and a staple diagram was manufactured to be of approximately 25 cm by using a bear-type sorter. The ratio of discontinuous fiber having a fiber length of not less than α mm occupying the sliver has been calculated as follows. When a line that is parallel (vertical to the abscissa axis (x axis)) to the ordinate axis (y axis) is drawn that passes through a point of the graph at which the numerical value of the ordinate axis becomes α, regions that are surrounded by the graph, the abscissa axis (x axis) and the ordinate axis (y axis) will be divided into two. From among the regions that have been divided into two, the ordinate axis (area of a region that is closer to the y axis (hereinafter referred to as "area A") is measured. The area of a region that is surrounded by the graph, the abscissa axis (x axis) and the ordinate axis (y axis) (hereinafter referred to as "area B") will simultaneously be measured. The ratio of areaAwith respect to area B is the ratio of discontinuous fiber having a fiber length of not less than α mm occupying in the sliver.

The staple diagram is illustrated in Fig. 7, and results of calculation are listed in Table 4. It can be understood from the numerical values as recited in Table 4 that can be obtained from Fig. 7, discontinuous fiber having a fiber length of not less than 20 mm occupied 75% of the sliver while discontinuous fiber having a fiber length of not less than 25 mm occupied 60% of the sliver. The longest fiber length was 54 mm while the average fiber length was 24.5 mm.

**TABLE 4**

| | Area A (mm²) | Area B (mm²) | Area A/Area B |
|---|---|---|---|
| Single fiber of not less than 20 mm | 4646 | 6165 | 0.75 |
| Single fiber of not less than 25 mm | 3681 | 6165 | 0.60 |

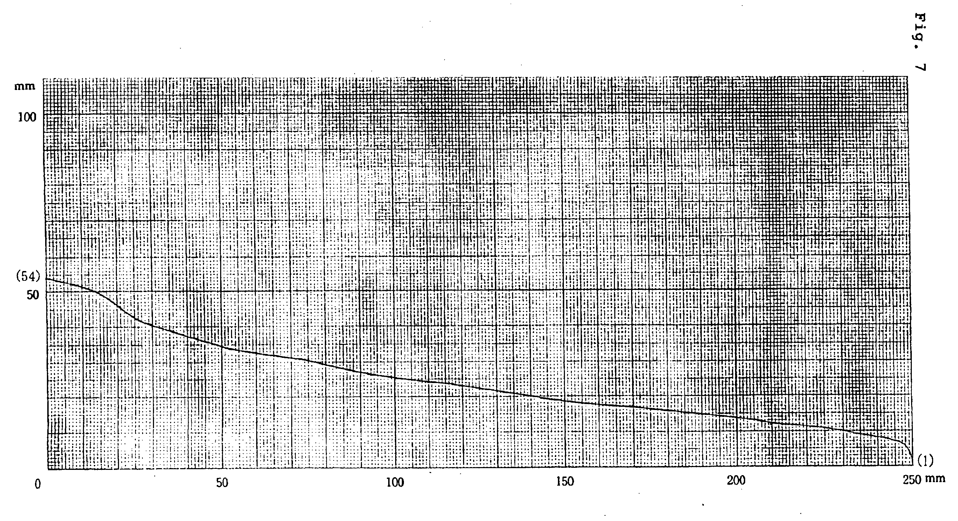

From among the methods as recited in Example 2, in the method of performing opening processes for four times, the fiber length was similarly measured also for the sliver after drawing the same once (which SF mixing rate is 0%). The staple diagram is illustrated in Fig. 8, and results of calculation are listed in Table 5. It can be understood from the numerical values as recited in Table 5 that can be obtained from Fig. 8, discontinuous fiber having a fiber length of not less than 20 mm occupied 76% of the sliver while discontinuous fiber having a fiber length of not less than 25 mm occupied 63% of the sliver. The longest fiber length was 58 mm while the average fiber length was 24.3 mm.

**TABLE 5**

| | Area A (mm²) | Area B (mm²) | Area A/Area B |
|---|---|---|---|
| Single fiber of not less than 20 mm | 4646 | 6094 | 0.76 |
| Single fiber of not less than 25 mm | 3823 | 6094 | 0.63 |

### Industrial Applicability

It is the case with heat-resistant and high-performance spun yarn products that exhibit heat-resistance and superior tensile strength and cut resistance that even when the products have been stained, torn or damaged through use so that they can no longer be used but need to be wasted, their properties will not vanish, and the superiority thereof with respect to like products of generic spun yarn will not be changed. Accordingly, it will be easy to recycle used heat-resistant and high-performance spun yarn products by performing washing, addition of oil finish, crushing processes and opening by using a known opening machine. By intermixing a suitable amount of unused discontinuous fiber, it will be possible to easily achieve recovery to exhibit performances that are applicable to specified purposes. This has consequently the benefit that recycling is promoted and that it is possible to contribute for application to environments of a recycling-based society.

According to the recycling method of the present invention, spun yarn is created while maintaining the length of discontinuous fiber in a condition close to the original length of the spun yarn. At request, unused discontinuous fiber is mixed. Consequently, the recycled heat-resistant and high-performance spun yarn will advantageously exhibit a high recovery of tensile strength. It will accordingly be possible to improve the added value of the recycled heat-resistant and high-performance spun yarn, to expand the purposes of use, and the expanding of the purpose will lead to expansion of the recycled heat-resistant and high-performance spun yarn that can absorb costs for recycling.

## Claims

1. A method for recycling used heat-resistant and high-performance spun yarn products, **characterized in that** used heat-resistant and high-performance spun yarn products are washed in advance at request and undergo crushing processes, a crushedmaterial thus obtained is opened to become a cotton-like material, and the cotton-like material is spun for recycling the spun yarn.

2. The method for recycling used heat-resistant and high-performance spun yarn products as claimed in Claim 1, wherein unused discontinuous fiber having a length of 30 to 200 mm is intermixed at a ratio of 10 to 90% of the total prior to or at the time of spinning.

3. The method for recycling used heat-resistant and high-performance spun yarn products as claimed in Claim 1 or 2, wherein the heat-resistant and high-performance spun yarn is comprised of one or more types of fiber selected from the group consisting of wholly aromatic polyamide fiber, wholly aromatic polyester fiber and polyparaphenylene benzobisoxazole fiber.

4. The method for recycling used heat-resistant and high-performance spun yarn products as claimed in Claims 1 to 3, wherein the used heat-resistant and high-performance spun yarn product is a safeguard wear and a working glove.

5. The method for recycling used heat-resistant and high-performance spun yarn products as claimed in Claims 1 to 4, wherein the cotton-like material contains discontinuous fiber having a length of not less than 20 mm by not less than 50% and/or contains discontinuous fiber having a length that corresponds to not less than 40% of a length of a discontinuous fiber of spun yarn employed in the heat-resistant and high-performance spun yarn product.

6. A recycled heat-resistant and high-performance spun yarn that is obtained by the method for recycling used heat-resistant and high-performance spun yarn products as claimed in Claims 1 to 5.

7. A recycled heat-resistant and high-performance spun yarn, wherein the spun yarn contains not less than 20% of discontinuous fiber having a length of not less than 20 mm.

8. A fiber product containing the recycled heat-resistant and high-performance spun yarn as claimed in Claim 6 or 7.

9. The fiber product as claimed in Claim 8, wherein the product is a braid, a textile, knittings, a rope, a cord, a packing material, a safeguard wear or a working glove.

10. The fiber product as claimed in Claim 8 or 9, wherein it is indicated on the product that it contains recycled heat-resistant and high-performance spun yarn.

11. The fiber product as claimed in Claim 10, wherein a number of recycling times of the recycled heat-resistant and high-performance spun yarn is further indicated.
